(19) Europäisches Patentamt
European Patent Office
Office européen des brevets

(11) **EP 4 268 933 A1**

(12) **EUROPEAN PATENT APPLICATION**
published in accordance with Art. 153(4) EPC

(43) Date of publication:
   **01.11.2023 Bulletin 2023/44**

(21) Application number: **21915078.6**

(22) Date of filing: **14.12.2021**

(51) International Patent Classification (IPC):
   *B01D 53/14* (2006.01)     *B01D 53/62* (2006.01)
   *B01D 53/82* (2006.01)     *B01D 53/96* (2006.01)
   *C01B 32/50* (2017.01)     *B01J 20/04* (2006.01)
   *B01J 20/28* (2006.01)     *B01J 20/30* (2006.01)
   *B01J 20/34* (2006.01)

(52) Cooperative Patent Classification (CPC):
   **B01D 53/14; B01D 53/62; B01D 53/82;**
   **B01D 53/96; B01J 20/04; B01J 20/28; B01J 20/30;**
   **B01J 20/34; C01B 32/50;** Y02C 20/40

(86) International application number:
   **PCT/JP2021/045957**

(87) International publication number:
   **WO 2022/145217 (07.07.2022 Gazette 2022/27)**

(84) Designated Contracting States:
   **AL AT BE BG CH CY CZ DE DK EE ES FI FR GB**
   **GR HR HU IE IS IT LI LT LU LV MC MK MT NL NO**
   **PL PT RO RS SE SI SK SM TR**
   Designated Extension States:
   **BA ME**
   Designated Validation States:
   **KH MA MD TN**

(30) Priority: **28.12.2020 JP 2020219016**

(71) Applicant: **SUMITOMO CHEMICAL COMPANY,**
   **LIMITED**
   **Tokyo 103-6020 (JP)**

(72) Inventor: **HAYASHI, Munehiro**
   **Ichihara-shi, Chiba 299-0195 (JP)**

(74) Representative: **Global IP Europe**
   **Patentanwaltskanzlei**
   **Pfarrstraße 14**
   **80538 München (DE)**

(54) **METHOD FOR REDUCING CARBON DIOXIDE IN LIVING SPACE, AND CARBON DIOXIDE ADSORBENT AND PRODUCTION METHOD THEREFOR**

(57)    Provided is a method for efficiently reducing carbon dioxide in a living space. This method for efficiently reducing carbon dioxide in a living space includes: a step for causing carbon dioxide to be adsorbed to a carbon dioxide adsorbent by bringing the carbon dioxide adsorbent into contact with a gas including moisture and carbon dioxide in a living space; a step for separating carbon dioxide from the carbon dioxide adsorbent by heating the carbon dioxide adsorbent having adsorbed thereto carbon dioxide to 50-900°C; and a step for discharging the separated carbon dioxide to the outside of the living space. The carbon dioxide adsorbent contains: at least one alkali metal carbonate containing an alkali metal; and a metal compound containing at least one element selected from the group consisting of Group 3 elements in the periodic table and Group 4 elements in the periodic table.

FIG. 1

**Description**

TECHNICAL FIELD

The present invention relates to a method for reducing carbon dioxide in a living space, and a carbon dioxide adsorbent and a production method therefor.

BACKGROUND ART

Various studies on a method for recovering carbon dioxide recognized as a causative substance of global warming are recently being conducted.
Specifically, a carbon dioxide recovery material is known that is used for the purpose of recovering carbon dioxide discharged from facilities such as a thermal power plant, the material being a carbon dioxide absorber including a porous material that has pores having sodium carbonate or potassium carbonate therein (see Patent Document 1).

PRIOR ART DOCUMENT

PATENT DOCUMENT

Patent Document 1: JP-A-2016-59917

SUMMARY OF THE INVENTION

PROBLEMS TO BE SOLVED BY THE INVENTION

The conventional carbon dioxide absorber (carbon dioxide adsorbent), however, is insufficient in adsorption speed of carbon dioxide (hereinafter, called carbon dioxide adsorption speed) and cannot be said to have a sufficient retention rate of carbon dioxide adsorption speed (hereinafter, called a carbon dioxide adsorption speed retention rate) after repetitively used and regenerated a plurality of times.

MEANS FOR SOLVING THE PROBLEMS

The inventors of the present invention have conducted earnest studies to solve the problems, consequently found that the problems can be solved by blending a metal compound particularly containing a prescribed element, and completed the present invention.
Accordingly, the present invention provides the following [1] to [17].

[1] A method for reducing carbon dioxide in a living space, the method including:

a step of adsorbing carbon dioxide to a carbon dioxide adsorbent by bringing the carbon dioxide adsorbent into contact with a gas including carbon dioxide and moisture in a living space;
a step of separating carbon dioxide from the carbon dioxide adsorbent having carbon dioxide adsorbed thereto by heating the carbon dioxide adsorbent to 50°C to 900°C; and
a step of exteriorly discharging from the living space the carbon dioxide separated,
the carbon dioxide adsorbent containing: at least one alkali metal carbonate containing an alkali metal; and a metal compound containing at least one element selected from the group consisting of a group 3 element and a group 4 element in a periodic table.

[2] The method according to [1], wherein the metal compound contains at least one element selected from the group consisting of cerium, titanium, and zirconium.
[3] The method according to [2], wherein the metal compound contains zirconium.
[4] The method according to [3], wherein the metal compound is zirconium oxide.
[5] The method according to any one of [1] to [4], wherein the living space is a house, an office, or a school.
[6] The method according to any one of [1] to [4], wherein the living space is a vehicle.
[7] A carbon dioxide adsorbent containing:

a porous material;
at least one alkali metal carbonate containing an alkali metal; and

a metal compound containing at least one element selected from the group consisting of a group 3 element and a group 4 element in a periodic table.

[8] The carbon dioxide adsorbent according to [7], wherein the metal compound contains at least one element selected from the group consisting of cerium, titanium, and zirconium.

[9] The carbon dioxide adsorbent according to [7] or [8], wherein a content of the at least one element selected from the group consisting of a group 3 element and a group 4 element in the periodic table is 0.1 mmol/g to 25.0 mmol/g.

[10] The carbon dioxide adsorbent according to any one of [7] to [9], wherein the alkali metal carbonate contains at least one element selected from the group consisting of sodium, potassium, and cesium.

[11] The carbon dioxide adsorbent according to any one of [7] to [10], containing two or more of the alkali metal carbonates.

[12] The carbon dioxide adsorbent according to any one of [7] to [11], wherein a content of the alkali metal is 1.0 mmol/g to 50.0 mmol/g.

[13] The carbon dioxide adsorbent according to any one of [7] to [12], wherein the porous material is at least one selected from the group consisting of silicon oxide, aluminum oxide, activated carbon, and calcium silicate.

[14] The carbon dioxide adsorbent according to any one of [7] to [13], having an average pore diameter of 0.3 nm to 500 nm.

[15] The carbon dioxide adsorbent according to any one of [7] to [14], including the porous material supporting the alkali metal carbonate and the metal compound.

[16] A method for producing the carbon dioxide adsorbent according to any one of [7] to [15], the method including following steps:

a step (1) of obtaining a carbon dioxide adsorbent precursor by bringing the porous material into contact with a solution containing the metal compound, and heating the porous material; and

a step (2) of obtaining the carbon dioxide adsorbent by bringing the carbon dioxide adsorbent precursor into contact with a solution containing the alkali metal carbonate, and heating the carbon dioxide adsorbent precursor.

[17] A method for adsorbing and separating carbon dioxide, the method including:

a step of adsorbing carbon dioxide to the carbon dioxide adsorbent according to any one of [7] to [15] by bringing the carbon dioxide adsorbent into contact with a gas including carbon dioxide; and

a step of separating carbon dioxide from the carbon dioxide adsorbent having carbon dioxide adsorbed thereto by heating the carbon dioxide adsorbent to 50°C to 900°C.

EFFECTS OF THE INVENTION

The carbon dioxide adsorbent according to the present invention can further improve the carbon dioxide adsorption speed, and can further improve the carbon dioxide adsorption speed retention rate. The method, according to the present invention, for reducing carbon dioxide in a living space can efficiently reduce carbon dioxide in a living space.

BRIEF DESCRIPTION OF THE DRAWING

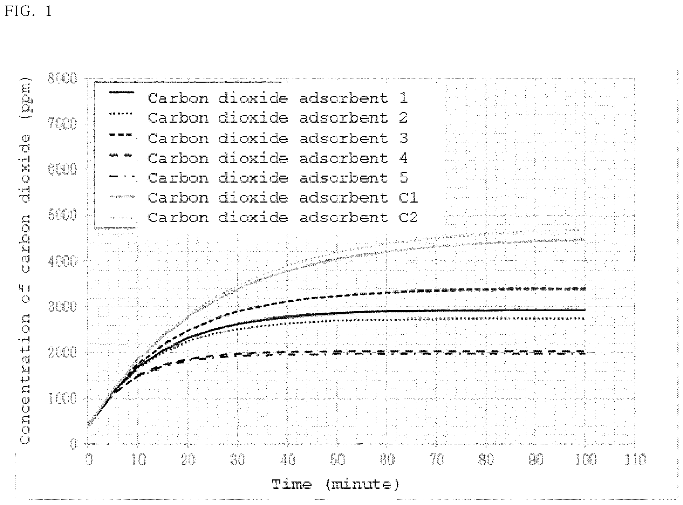

Fig. 1 is a graph representing calculation results related to a method for reducing the concentration of carbon dioxide in a living space, using carbon dioxide adsorbents according to Examples 1 to 5 and Comparative Examples 1 and 2.

MODE FOR CARRYING OUT THE INVENTION

Hereinafter, embodiments of the present invention are specifically described. The present invention is not limited to the specific embodiments described below, and can be modified as appropriate without departing from the purpose of the present invention.

1. Carbon dioxide adsorbent

A carbon dioxide adsorbent according to the present embodiment contains: a porous material; at least one alkali metal carbonate containing an alkali metal; and a metal compound containing at least one element selected from the group consisting of a group 3 element and a group 4 element in a periodic table.

A carbon dioxide adsorbent used in a method, according to the present embodiment, for reducing carbon dioxide in a living space (hereinafter, also called a carbon dioxide adsorbent of the method according to the present embodiment) contains: at least one alkali metal carbonate containing an alkali metal; and a metal compound containing at least one element selected from the group consisting of a group 3 element and a group 4 element in a periodic table. The carbon dioxide adsorbent of the method according to the present embodiment may further contain a porous material.

From the viewpoint of further improving the carbon dioxide adsorption speed and further improving the carbon dioxide adsorption speed retention rate, the carbon dioxide adsorbent according to the present embodiment and the carbon dioxide adsorbent of the method according to the present embodiment have an average pore diameter of 0.3 nm to 500 nm, preferably 1 nm to 100 nm.

The average pore diameter (unit: nm) of the carbon dioxide adsorbent according to the present embodiment and the carbon dioxide adsorbent of the method according to the present embodiment can be analyzed and thus measured by a nitrogen adsorption method using any conventionally known suitable specific surface area/pore distribution measuring apparatus.

Specifically, a nitrogen adsorption-desorption isotherm with respect to the carbon dioxide adsorbent is obtained, and a total pore volume (V) (unit: $cm^3/g$) and a specific surface area (A) (unit: $m^2/g$) are further obtained from the obtained adsorption-desorption isotherm, and an average pore diameter (D) can be calculated on the basis of the following equation.

$$D = 4V/A$$

The carbon dioxide adsorbent according to the present embodiment and the carbon dioxide adsorbent of the method according to the present embodiment may contain a porous material supporting the alkali metal carbonate and the metal compound. In other words, the carbon dioxide adsorbent according to the present embodiment may have an integrated configuration in which the alkali metal carbonate and the metal compound are supported by the porous material. The form of the carbon dioxide adsorbent according to the present embodiment and the carbon dioxide adsorbent of the method according to the present embodiment, however, is not limited to this configuration, and in the carbon dioxide adsorbent, particularly the alkali metal carbonate may be free from the porous material.

Here, the components (materials) are specifically described that can be contained in the carbon dioxide adsorbent according to the present embodiment and the carbon dioxide adsorbent of the method according to the present embodiment.

(1) Porous material

Examples of the porous material include: oxides such as aluminum oxide and silicon oxide; composite oxides such as calcium silicate and silica alumina; and activated carbon. Among these examples, using at least one selected from the group consisting of silicon oxide, aluminum oxide, activated carbon, and calcium silicate is preferable from the viewpoint of further improving the carbon dioxide adsorption speed and further improving the carbon dioxide adsorption speed retention rate.

Here, the activated carbon is a combustible substance. Therefore, when the temperature (regeneration temperature) described later for regenerating the carbon dioxide adsorbent is, for example, 250°C or more, using silicon oxide as the porous material is more preferable.

The porous materials listed above can be produced by any conventionally known suitable production method. Alternatively, commercially available porous materials can also be used as the porous materials listed above.

The type of aluminum oxide is not particularly limited, and any crystal system such as an α-type, a γ-type, and a θ-type can be employed. In addition, the method for producing aluminum oxide is not particularly limited. Aluminum oxide can be produced, for example, by washing bauxite, which is a mineral containing aluminum, with a hot sodium hydroxide solution, cooling and precipitating aluminum hydroxide fused in the sodium hydroxide solution, and heating and dehydrating the aluminum hydroxide.

Examples of silicon oxide used as the porous material include a silica gel, mesoporous silica, and zeolite. Silicon oxide can be produced by a wet method or a dry method. Examples of the wet method include a precipitation method and a gel method. Examples of the dry method include a combustion method.

When a silica gel used as the porous material is produced by the wet method, the silica gel can be obtained by neutralizing a compound represented by a general formula $Na_2O \cdot nSiO_2$ with sulfuric acid or hydrochloric acid to give a hydrogel through a silica sol having a composition of polysilicic acid, and further removing water in the hydrogel. The method for removing water in the hydrogel is not particularly limited. The water in the hydrogel may be directly vaporized, or may be dried and heated after replaced with a hydrophilic organic solvent having a relatively low being point, such as an alcohol and ketone. By drying and heating the hydrogel after replacing the water with a hydrophilic organic solvent having a low boiling point, such as an alcohol and ketone, silicon oxide having a larger pore volume and a larger pore diameter can be obtained.

The type of mesoporous silica is not particularly limited as long as the mesoporous silica has a mesopore in the structure thereof. Mesoporous silica usually has a void of 1.5 nm to 50 nm. The method for producing mesoporous silica is not particularly limited. Mesoporous silica can be produced, for example, by a self-organizing process of a mixed liquid of a sol-gel precursor and a structure-directing amphiphilic substance. Specifically, first, liquid-crystal micelles are formed in water, using a surfactant such as cetyltrimethylammonium bromide, and a ceramic sol-gel precursor such as tetraethyl orthosilicic acid is added thereto to cause hydrolysis and condensation and thus form a network of silica around the micelles. Next, by subjecting this resultant product to a heat treatment or solvent extraction to remove the organic mold, mesoporous silica can be obtained.

The type of zeolite is not particularly limited, and examples thereof include synthetic zeolite, artificial zeolite, and natural zeolite. The method for producing zeolite is not particularly limited. Zeolite can be produced, for example, by hydrothermally reacting a mixture containing an alumina source, a silica source, an alkali source, an organic structure directing agent, and water, and next drying and firing the reaction product.

The type of calcium silicate is not particularly limited, and any crystal form such as wollastonite-based, tobermorite-based, and xonotlite-based can be employed. The method for producing calcium silicate is not particularly limited. Calcium silicate (secondary particles) can be produced, for example, by hydrothermally reacting under stirring a mixture containing a siliceous raw material, a calcareous raw material, and water.

When activated carbon is used as the porous material, the activated carbon can be produced by heating and thereby carbonizing a raw-material carbonous substance to form a carbide, and next activating this carbide.

The carbonous substance that is a raw material of activated carbon is not particularly limited. Examples of the carbonous substance include wood, sawdust, coconut husk, pulping waste liquor, coal, a petroleum material, and a synthetic resin.

The method for activating (stimulation) the carbide after carbonizing the carbonous substance is not particularly limited. Examples of the activation method include gas activation and chemical activation.

Examples of the gas activation method include a method for performing a high-temperature treatment with moisture, carbon dioxide, or air. The gas activation is considered to progress by a two-stage process. In the first stage that is a heating process, an unorganized portion of the carbide is selectively decomposed and consumed, releasing fine pore spaces in the carbon structure and thus rapidly increasing the internal surface area. In the second stage that is a gasification reaction process, a carbon crystal constituting the carbide or carbon constituting the fine pore-space portion is reacted and consumed, forming pore spaces having a large pore diameter in a complicated and organized manner. In this pore-space forming process, activated carbon mainly including micropores is obtained when the carbon reaction-consumption rate is 50% or less, and activated carbon having macropores increased therein is obtained when the carbon reaction-consumption rate is more than 75%. Activated carbon including both micropores and macropores can be obtained at carbon reaction-consumption rates therebetween.

Examples of the chemical activation method include a method of using zinc chloride, phosphoric acid, calcium chloride, or potassium sulfide. In general chemical activation, activated carbon is known to have a large pore volume and a large average pore diameter. Activated carbon has various shapes such as a powder shape, a particle shape, a crushed shape, a fiber shape, and a honeycomb shape. The shape of activated carbon applied to the carbon dioxide adsorbent according to the present invention is not particularly limited.

(2) Alkali metal carbonate

The carbon dioxide adsorbent according to the present embodiment and the carbon dioxide adsorbent of the method according to the present embodiment contain at least one alkali metal carbonate containing an alkali metal. From the viewpoint of further improving the carbon dioxide adsorption speed and further improving the carbon dioxide adsorption speed retention rate, the carbon dioxide adsorbent according to the present embodiment and the carbon dioxide adsorbent of the method according to the present embodiment preferably contains two or more alkali metal carbonates.

In the present embodiment, the alkali metal carbonate preferably contains at least one element selected from the group consisting of lithium, sodium, potassium, rubidium, and cesium. From the viewpoint of further improving the carbon dioxide adsorption speed and further improving the carbon dioxide adsorption speed retention rate, the alkali metal carbonate contains preferably sodium, potassium, or cesium, more preferably potassium.

Specific examples of the alkali metal carbonate include lithium carbonate, lithium hydrogen carbonate, sodium carbonate, sodium hydrogen carbonate, potassium carbonate, potassium hydrogen carbonate, rubidium carbonate, rubidium hydrogen carbonate, cesium carbonate, and cesium hydrogen carbonate.

From the viewpoint of further improving the carbon dioxide adsorption speed and further improving the carbon dioxide adsorption speed retention rate, the content of the alkali metal in the carbon dioxide adsorbent according to the present embodiment and the content of the alkali metal in the carbon dioxide adsorbent of the method according to the present embodiment are preferably 1.0 mmol/g to 50.0 mmol/g, more preferably 1.0 mmol/g to 20.0 mmol/g.

(3) Metal compound

The metal compound contained in the carbon dioxide adsorbent according to the present embodiment and the carbon dioxide adsorbent of the method according to the present embodiment is a metal compound containing at least one element selected from the group consisting of a group 3 element and a group 4 element in the periodic table.

From the viewpoint of further improving the carbon dioxide adsorption speed and further improving the carbon dioxide adsorption speed retention rate, and from the viewpoint of availability, the element contained in the metal compound is preferably at least one element selected from the group consisting of cerium, titanium, and zirconium.

Specific examples of the metal compound contained in the carbon dioxide adsorbent include: cerium compounds such as cerium oxide, cerium carbonate, cerium nitrate, cerium(III) hydroxide, cerium(IV) hydroxide, cerium chloride, cerium acetate, and cerium(III) acetylacetonate; titanium compounds such as titanium oxide, titanium hydroxide, tetramethyl titanate, tetraethyl titanate, tetrapropyl titanate, tetraisopropyl titanate, tetrabutyl titanate, tetraisobutyl titanate, tetra-2-ethylhexyl titanate, tetraoctadecyl titanate, titanium(IV) oxyacetylacetonate, and titanium(IV) diisopropoxybisacetylacetonate; and zirconium compounds such as zirconium oxide, zirconium(IV) carbonate, zirconium oxynitrate, zirconium(IV) hydroxide, and zirconium(IV) chloride.

The metal compounds listed above may be contained, in the carbon dioxide adsorbent, as the metal compound itself or in a form such as a composite with the porous material, the alkali metal carbonate, another metal compound, and/or another component described later.

From the viewpoint of further improving the carbon dioxide adsorption speed and further improving the carbon dioxide adsorption speed retention rate, the content of the element contained in the metal compound is preferably 0.1 mmol/g to 25.0 mmol/g, more preferably 0.1 mmol/g to 10.0 mmol/g.

(4) Other component

The carbon dioxide adsorbent according to the present embodiment may further contain another component in addition to the components (1) to (3) described above. In addition, the carbon dioxide adsorbent of the method according to the present embodiment may further contain another component in addition to the components (2) and (3) described above. Examples of the other component include: alkali metal compounds such as cesium nitrate, cesium oxide, cesium hydroxide, and cesium acetate; and alkaline earth metal compounds such as magnesium carbonate, magnesium oxide, calcium carbonate, and calcium oxide.

The other components listed above may be contained, in the carbon dioxide adsorbent, as this component itself or in a form such as a composite with the porous material, the alkali metal carbonate, or the metal compound, and an oxide derived therefrom.

The shape of the carbon dioxide adsorbent according to the present embodiment and the carbon dioxide adsorbent of the method according to the present embodiment is not particularly limited. The carbon dioxide adsorbent according to the present embodiment and the carbon dioxide adsorbent of the method according to the present embodiment are usually a powder or a molded article. As the molded article, the porous material is used that is formed into a particle shape (spherical shape), a pellet shape (columnar shape), a ring shape, a honeycomb shape, or the like, or the carbon dioxide adsorbent that is powdery can be molded into a prescribed shape by any conventionally known suitable method to achieve any suitable form.

The carbon dioxide adsorbent according to the present embodiment and the carbon dioxide adsorbent of the method according to the present embodiment can be molded into, for example, a particle shape (spherical shape), a pellet shape (columnar shape), an extruded shape, a ring shape, or a honeycomb shape, or can be formed into a granule shape having any suitable size by once molding into a prescribed shape, and then pulverizing and classifying.

From the viewpoint of improving handleability and maximizing the carbon dioxide adsorption performance, the diameter of the carbon dioxide adsorbent that has a particle shape (spherical shape) is usually set to preferably 10 mm or less, more preferably 5 mm or less. The lower limit of the diameter of the carbon dioxide adsorbent according to the present embodiment is not particularly limited. Here, the diameter of the carbon dioxide adsorbent refers to the diameter of a sphere when the carbon dioxide adsorbent has a spherical shape. When the carbon dioxide adsorbent has a pellet shape (columnar shape) and a sectional surface cut in the direction perpendicular to the elongation direction is a circle, the diameter refers to the diameter of the circle. When the carbon dioxide adsorbent has another shape, the diameter refers to the maximum width (maximum diameter) of a sectional surface.

2. Method for producing carbon dioxide adsorbent according to the present embodiment

A method for producing the carbon dioxide adsorbent according to the present embodiment includes following steps:

a step (1) of obtaining a carbon dioxide adsorbent precursor by bringing the porous material into contact with a solution containing the metal compound, and heating the porous material; and
a step (2) of obtaining the carbon dioxide adsorbent by bringing the carbon dioxide adsorbent precursor into contact with a solution containing the alkali metal carbonate, and heating the carbon dioxide adsorbent precursor.

Hereinafter the method is specifically described.

(1) Step (1)

The step (1) is a step of obtaining a carbon dioxide adsorbent precursor by bringing the already described porous material into contact with a solution containing the already described metal compound, and heating the porous material. Here, the "heating" includes a drying step and/or a firing step.

Here, the "carbon dioxide adsorbent precursor" means a material of the carbon dioxide adsorbent that is to be the carbon dioxide adsorbent by further processing.

Examples of a solvent used in the "solution containing the metal compound" used in the step (1) include: water (ion-exchanged water); alcohols such as methanol, ethanol, and isopropyl alcohol; polar organic solvents such as acetone, acetonitrile, and tetrahydrofuran; and a mixed solvent containing two or more of these solvents. Here, the "solution" includes a dispersion and a suspension.

The concentration of the metal compound in the solution is preferably 0.01 mass% to 100 mass%. From the viewpoint of production efficiency of the carbon dioxide adsorbent precursor, the concentration is more preferably 0.1 mass% to 100 mass%, further preferably 1 mass% to 100 mass%.

When the already described "other material" is used, a mixed solution (e.g., a mixed aqueous solution) obtained by adding to the already described solvent the "other material" in addition to the "metal compound" can be used as the "solution".

When the "other material" is used, the content of the "other material" in the mixed solution is preferably 0.01 mass% to 90 mass%. From the viewpoint of production efficiency of the carbon dioxide adsorbent precursor, the content is more preferably 0.1 mass% to 90 mass%, further preferably 1 mass% to 90 mass%.

The method for bringing the porous material into contact with the solution containing the metal compound is not particularly limited provided that the porous material is evenly brought into contact with the solution containing the metal compound and the solution reaches into pores of the porous material and is uniformly absorbed. As an example of the contact method, any conventionally known suitable method such as liquid dropping, spraying, and immersion can be applied.

The drying step is performed by drying the porous material that has been brought into contact with the solution (mixed solution) until there is no change in weight. Specifically, the drying step can be performed, for example, by drying the porous material at ordinary temperature for about 1 hour and then further heating it using any conventionally known suitable dryer (e.g., an oven) at a temperature of preferably 30°C to 120°C until there is no change in weight.

A firing step is performed following the drying step. Specifically, the firing step can be performed by firing the porous material using any conventionally known suitable heater (e.g., a muffle furnace) at 200°C to 800°C for 1 hour to 12 hours. By the steps described above, the carbon dioxide adsorbent precursor can be obtained including a surface onto which and/or pores into which at least a part of the metal compound or a metal element derived from the metal compound, or a compound has been attached or is present in a solid solution state.

(2) Step (2)

The step (2) is a step of obtaining the carbon dioxide adsorbent by bringing the carbon dioxide adsorbent precursor into contact with a solution containing the alkali metal carbonate, and heating the carbon dioxide adsorbent precursor. Here, the "heating" includes a drying step and/or a firing step.

In the step (2), first, the carbon dioxide adsorbent precursor obtained by the step (1) is brought into contact with a solution containing the alkali metal carbonate (e.g., an aqueous potassium carbonate solution).

The method for bringing the carbon dioxide adsorbent precursor into contact with the solution containing the alkali metal carbonate is not particularly limited provided that the carbon dioxide adsorbent precursor is evenly brought into contact with the solution containing the alkali metal carbonate and the solution reaches into pores of the carbon dioxide adsorbent precursor and is uniformly absorbed. As an example of the contact method, any conventionally known suitable method such as liquid dropping, spraying, and immersion can be applied.

The drying step is performed by drying the carbon dioxide adsorbent precursor that has been brought into contact with the alkali metal carbonate until there is no change in weight. Specifically, the drying step can be performed, for example, by drying the carbon dioxide adsorbent precursor at ordinary temperature for about 1 hour and then further heating it using any conventionally known suitable dryer (e.g., an oven) at a temperature of preferably 30°C to 120°C until there is no change in weight.

A firing step may be performed following the drying step. Specifically, the firing step can be performed by heating the carbon dioxide adsorbent precursor using any conventionally known suitable heater (e.g., an oven and a muffle furnace) at 30°C to 500°C, more preferably at a temperature of 30°C to 300°C until there is no change in weight.

By the steps described above, the carbon dioxide adsorbent can be obtained including a surface onto which and/or pores into which at least a part of the alkali metal carbonate has been attached.

3. Method for producing carbon dioxide adsorbent of method according to the present embodiment

A method for producing the carbon dioxide adsorbent of the method according to the present embodiment includes a step of obtaining the carbon dioxide adsorbent of the method according to the present embodiment by bringing the metal compound into contact with a solution containing the alkali metal carbonate, and heating the metal compound. Here, the "heating" includes a drying step and/or a firing step.

Hereinafter the method is specifically described.

Examples of a solvent used in the "solution containing the alkali metal carbonate" include: water (ion-exchanged water); alcohols such as methanol, ethanol, and isopropyl alcohol; polar organic solvents such as acetone, acetonitrile, and tetrahydrofuran; and a mixed solvent containing two or more of these solvents. Here, the "solution" includes a dispersion and a suspension.

The concentration of the alkali metal carbonate in the solution is preferably 1 mass% to 53 mass%. From the viewpoint of production efficiency of the carbon dioxide adsorbent precursor, the concentration is more preferably 5 mass% to 50 mass%, further preferably 10 mass% to 50 mass%.

When the already described "other material" is used, a mixed solution (e.g., a mixed aqueous solution) obtained by adding to the already described solvent the "other material" in addition to the "alkali metal carbonate" can be used as the "solution".

When the "other material" is used, the content of the "other material" in the mixed solution is preferably 0.01 mass% to 90 mass%. From the viewpoint of production efficiency of the carbon dioxide adsorbent of the method according to the present embodiment, the content is more preferably 0.1 mass% to 90 mass%, further preferably 1 mass% to 90 mass%.

The method for bringing the metal compound into contact with the solution containing the alkali metal carbonate is not particularly limited provided that the metal compound is evenly brought into contact with the solution containing the alkali metal carbonate and the solution reaches into pores of the metal compound and is uniformly absorbed. As an example of the contact method, any conventionally known suitable method such as liquid dropping, spraying, and immersion can be applied.

The drying step is performed by drying the metal compound that has been brought into contact with the alkali metal carbonate until there is no change in weight. Specifically, the drying step can be performed, for example, by drying the metal compound at ordinary temperature for about 1 hour and then further heating it using any conventionally known suitable dryer (e.g., an oven) at a temperature of preferably 30°C to 120°C until there is no change in weight.

A firing step may be performed following the drying step. Specifically, the firing step can be performed by heating the carbon dioxide adsorbent precursor using any conventionally known suitable heater (e.g., an oven and a muffle furnace) at 30°C to 500°C, more preferably at a temperature of 30°C to 300°C until there is no change in weight.

By the steps described above, the carbon dioxide adsorbent can be obtained including the metal compound including a surface onto which and/or pores into which at least a part of the alkali metal carbonate has been attached.

4. Method for adsorbing and desorbing carbon dioxide (method for using carbon dioxide adsorbent)

A method for adsorbing and desorbing carbon dioxide by using the carbon dioxide adsorbent according to the present embodiment includes: a step of adsorbing carbon dioxide to the carbon dioxide adsorbent by bringing the carbon dioxide adsorbent into contact with a gas including carbon dioxide; and a step of separating carbon dioxide from the carbon dioxide adsorbent having carbon dioxide adsorbed thereto by heating the carbon dioxide adsorbent to 50°C to 900°C.

(1) Step of adsorbing carbon dioxide to carbon dioxide adsorbent by bringing carbon dioxide adsorbent into contact with gas including carbon dioxide (called step (i))

The temperature in the step (i) that is a step of adsorbing carbon dioxide to the carbon dioxide adsorbent by bringing the carbon dioxide adsorbent into contact with a gas including carbon dioxide (the temperature for using the carbon dioxide adsorbent) is preferably 0°C to 100°C, more preferably 5°C to 80°C.

The carbon dioxide adsorbent according to the present embodiment is usually used, i.e., brought into contact with a gas including carbon dioxide at a temperature of 100°C or less (e.g., ordinary temperature). The carbon dioxide adsorbent according to the present embodiment, however, can be used even at a temperature higher than 100°C.

The humidity in the step (i) that is a step of adsorbing carbon dioxide to the carbon dioxide adsorbent by bringing the carbon dioxide adsorbent into contact with a gas including carbon dioxide (the humidity for using the carbon dioxide adsorbent) is preferably 1% to 100%, more preferably 5% to 90%.

The carbon dioxide adsorbent according to the present embodiment can be suitably applied to, for example, a carbon dioxide recovery device for recovering carbon dioxide from a gas including carbon dioxide or for selectively removing and recovering carbon dioxide particularly from a gas having a high concentration (partial pressure) of carbon dioxide.

When used particularly at a temperature of 100°C or less, the carbon dioxide adsorbent according to the present embodiment can be suitably mounted to an air purifier, an air conditioner, an air purifier and an air conditioner for adjusting the components particularly in the atmosphere of a vehicle, an air conditioner for agricultural greenhouses, and a building material and a container. When used at a temperature higher than 100°C, the carbon dioxide adsorbent according to the present embodiment can be suitably applied, for example, to recover carbon dioxide in a gas discharged from a chemical plant or a power plant.

The concentration (partial pressure) of carbon dioxide in the gas brought into contact with the carbon dioxide adsorbent and including carbon dioxide is not particularly limited in the step (i). The concentration of carbon dioxide in the air is usually about 400 ppm. The concentration of carbon dioxide in an in-vehicle atmosphere, however, can be as high as about 7000 ppm, for example, when internal air circulation is performed without introducing external air during a drive of a vehicle. It is generally said that when the internal air circulation is selected in a vehicle, the breathing rate is increased and sleepiness is induced at a concentration of carbon dioxide of 2000 ppm or more, and dizziness, a headache, and the like are induced at a concentration of 3000 ppm or more. Accordingly, the concentration of carbon dioxide presumed when the carbon dioxide adsorbent according to the present embodiment is applied particularly to an air purifier or air conditioner for vehicles is 400 ppm to 7000 ppm.

The components other than carbon dioxide and the concentration (partial pressure) thereof in the "gas including carbon dioxide" applied to the carbon dioxide adsorbent according to the present embodiment are not particularly limited. Examples of the components other than carbon dioxide include nitrogen, hydrogen, carbon monoxide, nitrogen oxides (NOx) such as nitrogen monoxide, and hydrocarbons such as methane.

The method for bringing the carbon dioxide adsorbent into contact with the gas including carbon dioxide is not particularly limited in the step (i). The contact of the carbon dioxide adsorbent with the gas including carbon dioxide may be performed, for example, by a distribution method of distributing the gas including carbon dioxide into a container housing the carbon dioxide adsorbent according to the present embodiment, or by leaving the carbon dioxide adsorbent to stand still so as to allow direct contact with the gas including carbon dioxide.

When the carbon dioxide adsorbent is brought into contact with the gas including carbon dioxide by the distribution method as described above, the supplied amount (space velocity) of the gas including carbon dioxide in a standard state (0°C, 0.1 MPa) is preferably 10 to 10,000,000/h, more preferably 100 to 5,000,000/h, further preferably 1,000 to 1,000,000/h. When the space velocity is set to 10 or more and 10,000,000/h or less, the adsorption efficiency of carbon dioxide per time can be made better. The treatment pressure on the carbon dioxide adsorbent is preferably 0.1 to 5 MPa, more preferably 0.1 to 1 MPa.

(2) Step of separating carbon dioxide from carbon dioxide adsorbent having carbon dioxide adsorbed thereto by heating carbon dioxide adsorbent to 50°C to 900°C (hereinafter, called step (ii))

The step (ii) may be performed on the carbon dioxide adsorbent itself or a component (e.g., a filter and a cartridge) having the carbon dioxide adsorbent applied thereto and removed from a device including the component, or may be performed on the already described devices including the carbon dioxide adsorbent.

For example, when the carbon dioxide adsorbent according to the present embodiment is applied to an air conditioner (air purifier) of a vehicle particularly by the distribution method, the step (ii) can be performed by switching the gas distributed to the carbon dioxide adsorbent from the "gas including carbon dioxide" to a gas heated to the above-described temperature for regeneration, separating carbon dioxide from the carbon dioxide adsorbent, and exteriorly discharging the carbon dioxide.

The heating temperature in the step (ii) is not particularly limited provided that the functions of the carbon dioxide adsorbent, the device including the carbon dioxide adsorbent, and the like are not impaired.

The heating temperature of the carbon dioxide adsorbent (the regeneration temperature of the carbon dioxide adsorbent) in the step (ii) can be set to 50°C to 900°C, preferably 50°C to 600°C, more preferably 50°C to 300°C. The treatment pressure on the carbon dioxide adsorbent is preferably 0.001 to 5 MPa, more preferably 0.01 to 1 MPa.

When the carbon dioxide adsorbent according to the present embodiment is applied particularly to a home appliance, the regeneration temperature of the carbon dioxide adsorbent can be set to lower temperatures.

When the carbon dioxide adsorbent according to the present embodiment is applied to, for example, an electric vehicle, the regeneration temperature is preferably set to 50°C to 200°C from the viewpoint of effectively using heat generated from a motor or the like.

The components in the gas (atmosphere) used for the heating in the step (ii) are not particularly limited. As the atmosphere for the heating, for example, air (atmospheric air) can be applied. From the viewpoint of more efficiently separating and removing carbon dioxide, an inert gas such as a nitrogen gas may be used.

Carbon dioxide separated from the carbon dioxide absorber according to the present embodiment can be recovered by any conventionally known suitable method. Specific examples of the recovery include a method for recovering carbon dioxide as dry ice by pressing and compressing, and cooling separated carbon dioxide.

5. Method for reducing carbon dioxide in living space (method for using carbon dioxide adsorbent)

A method for reducing carbon dioxide in a living space by using the carbon dioxide adsorbent of the method according to the present embodiment includes: a step of adsorbing carbon dioxide to the carbon dioxide adsorbent by bringing the carbon dioxide adsorbent into contact with a gas including carbon dioxide and moisture in a living space; a step of separating carbon dioxide from the carbon dioxide adsorbent having carbon dioxide adsorbed thereto by heating the carbon dioxide adsorbent to 50°C to 900°C; and a step of exteriorly discharging from the living space the carbon dioxide separated.

(1') Step of adsorbing carbon dioxide to carbon dioxide adsorbent by bringing carbon dioxide adsorbent into contact with gas including carbon dioxide and moisture in living space (called step (i'))

Examples of the living space include a house, an office, a school, and a vehicle.

The concentration of carbon dioxide in the gas including carbon dioxide and moisture in the living space is usually 400 ppm to 5000 ppm, and the concentration of moisture is, as relative humidity, usually 10% RH to 90% RH. Examples of another component include carbon monoxide, ammonia, and volatile organic compounds such as formaldehyde, acetaldehyde, and toluene.

Examples and preferred aspects of the step (i') other than described above are the same as the examples and preferred aspects of the step (i) described above.

(2') Step of separating carbon dioxide from carbon dioxide adsorbent having carbon dioxide adsorbed thereto by heating carbon dioxide adsorbent to 50°C to 900°C (hereinafter, called step (ii'))

Examples and preferred aspects of the step (ii') are the same as the examples and preferred aspects of the step (ii) described above.

(3') Step of exteriorly discharging from living space carbon dioxide separated (hereinafter, called step (iii'))

The step (iii') may be performed by taking out the carbon dioxide adsorbent having carbon dioxide adsorbed thereto from the living space, and performing the step (ii') outside the living space, or by disposing the carbon dioxide adsorbent in a container connected to the interior and the exterior of the living space through separate channels, and continuously switching the gas contacted with the carbon dioxide adsorbent with valves or the like respectively disposed on the channels to alternately perform the steps (i') and (ii').

The amount of carbon dioxide exteriorly discharged from the living space is preferably 1 to 10,000,000 L/h, more preferably 10 to 5,000,000 L/h, further preferably 1,00 to 1,000,000 L/h.

The pressure for exteriorly discharging carbon dioxide from the living space is preferably 0.001 to 5 MPa, more preferably 0.01 to 1 MPa.

The temperature for exteriorly discharging carbon dioxide from the living space can be set to 50°C to 900°C, preferably 50°C to 600°C, more preferably 50°C to 300°C.

6. Use of carbon dioxide adsorbent

As described already, the carbon dioxide adsorbent according to the present embodiment can be suitably applied to a carbon dioxide recovery device, an air purifier, an air conditioner, a building material, a container, and the like, and can more specifically be suitably applied to a filter, a cartridge, and the like of these components.

The carbon dioxide adsorbent according to the present embodiment can be applied to a filter by any conventionally known suitable method.

The material of the filter is not particularly limited, and examples thereof include diatom earth, activated carbon, zeolite, paper, a resin, a metal, glass, and ceramic. The material of the filter is preferably a material affording the already described heating temperature for separating carbon dioxide.

The structure of the filter is not particularly limited, and the filter member such as a honeycomb, filter paper, nonwoven fabric, and cloth may contain the carbon dioxide adsorbent according to the present embodiment in any suitable form.

The filter may have a structure in which a space defined by a breathable thin-film filter member such as filter paper, nonwoven fabric, and cloth is filled with the carbon dioxide adsorbent according to the present embodiment. When the filter member is filled with the carbon dioxide adsorbent according to the present embodiment, the diameter of the carbon dioxide adsorbent is preferably 5 mm or less.

The method for making the filter member contain the carbon dioxide adsorbent according to the present embodiment is not particularly limited, and any conventionally known suitable method can be applied. The method for making the filter member contain the carbon dioxide adsorbent according to the present embodiment may be performed, for example, by producing the filter member using a mixture of a raw material for producing the filter member with the carbon dioxide adsorbent according to the present embodiment, or by making the filter member support a slurry containing the carbon dioxide adsorbent according to the present embodiment, using a method such as dip coating, application, and spray dispersion.

The preparation of the slurry containing the carbon dioxide adsorbent according to the present embodiment can be performed by any conventionally known suitable method of using a prescribed solvent. The solvent used in the preparation of the slurry is not particularly limited, and for example, water or an alcohol can be used.

The slurry prepared using the above-described solvent and containing the carbon dioxide adsorbent according to the present embodiment can be applied or dispersed onto the filter member by an application method such as a dip coating method and a spray coating method.

The filter member onto which the slurry containing the carbon dioxide adsorbent according to the present embodiment is applied or dispersed may be dried by any conventionally known suitable method. The drying temperature is preferably 0°C to 200°C, more preferably 20°C to 150°C. The filter member may further be fired after dried. The firing temperature is preferably 150°C to 400°C, more preferably 200°C to 300°C.

The drying and/or firing atmosphere is not particularly limited. The drying and/or firing atmosphere can be an air atmosphere or an inert gas atmosphere such as a nitrogen gas and an argon gas.

The carbon dioxide adsorbent according to the present embodiment can be pellet-shaped as described already. For example, the carbon dioxide adsorbent that is pellet-shaped can be applied, by any conventionally known suitable filling method, to a member (e.g., a cartridge) formed of a material at least affording the heating temperature for separating carbon dioxide and configured to be able to distribute the gas including carbon dioxide.

The carbon dioxide adsorbent according to the present embodiment can further improve the carbon dioxide adsorption speed, and can further improve the carbon dioxide adsorption speed retention rate because it is considered to be able to prevent a decrease of the surface area of the carbon dioxide adsorbent caused by the use thereof.

By applying the carbon dioxide adsorbent according to the present embodiment particularly to an air conditioner or air purifier of a vehicle, even when the "internal air circulation" is selected, it is possible to prevent an excess in concentration of carbon dioxide in the in-vehicle atmosphere and thus prevent induction of symptoms such as sleepiness, dizziness, and a headache. Meanwhile, because it is possible to use a heater or cooler, the air-conditioning efficiency can be improved, thus not only keeping the in-vehicle environment good to passengers, but also further improving energy efficiency.

EXAMPLES

Hereinafter, the present invention is further specifically described by way of examples and comparative examples. The present invention is not limited by the following examples.

<Example 1: production of carbon dioxide adsorbent 1>

An aqueous solution (using ion-exchanged water, concentration: 61.7 mass%) of cerium(III) nitrate hexahydrate (manufactured by FUJIFILM Wako Pure Chemical Corporation) was prepared. The aqueous solution (0.8 mL) of cerium(III) nitrate hexahydrate was evenly delivered by drops to 1.0 g of porous particulate silicon oxide (manufactured by FUJI SILYSIA CHEMICAL LTD., Q-30, particle size: 30 nm) for absorption, and the silicon oxide was then dried at ordinary temperature for 1 hour and next dried using a multi oven (manufactured by AS ONE CORPORATION, MOV-300S) at 40°C until there was no change in weight.

Next, firing was performed using a muffle furnace (manufactured by Yamato Scientific Co., Ltd., FP100) at 600°C for 2 hours, and a carbon dioxide adsorbent precursor 1X was thus obtained.

To the total amount of the obtained carbon dioxide adsorbent precursor 1X, 0.8 mL of an aqueous solution (using ion-exchanged water, concentration: 46.3 mass%) of potassium carbonate (manufactured by FUJIFILM Wako Pure Chemical Corporation) were evenly delivered by drops, and the carbon dioxide adsorbent precursor 1X thus brought into contact with and having absorbed the aqueous solution was then dried at ordinary temperature for 1 hour and next dried using a multi oven (manufactured by AS ONE CORPORATION, MOV-300S) at 40°C to remove the solvent until there was no change in weight. A carbon dioxide adsorbent 1 was thereby obtained.

<Example 2: production of carbon dioxide adsorbent 2>

A carbon dioxide adsorbent 2 was produced in the same manner as in Example 1 except that an aqueous solution (using ion-exchanged water, concentration: 50.0 mass%) of zirconyl nitrate dihydrate (manufactured by FUJIFILM Wako Pure Chemical Corporation) was used in place of the aqueous solution of cerium(III) nitrate hexahydrate.

<Example 3: production of carbon dioxide adsorbent 3>

A carbon dioxide adsorbent 3 was produced in the same manner as in Example 1 except that a mixed aqueous solution (using ion-exchanged water, concentration of cerium(III) nitrate hexahydrate: 9.8 mass%, concentration of cesium nitrate: 22.0 mass%) of cerium(III) nitrate hexahydrate (manufactured by FUJIFILM Wako Pure Chemical Corporation) and cesium nitrate (manufactured by FUJIFILM Wako Pure Chemical Corporation) was used in place of the aqueous solution of cerium(III) nitrate hexahydrate.

<Example 4: production of carbon dioxide adsorbent 4>

A solution of isopropyl alcohol (KANTO CHEMICAL CO., INC.) (called isopropyl alcohol solution) containing tetraisopropyl orthotitanate (Tokyo Chemical Industry Co., Ltd.) (concentration: 46.2 mass%) was prepared. The prepared isopropyl alcohol solution (1.8 mL) was evenly delivered by drops to 1.0 g of porous particulate silicon oxide (manufactured by FUJI SILYSIA CHEMICAL LTD., Q-30), which was thus brought into contact with and absorbed the solution, and the silicon oxide was then dried at ordinary temperature until there was no change in weight.

Next, firing was performed using a muffle furnace (manufactured by Yamato Scientific Co., Ltd., FP100) at 600°C for 2 hours, and a carbon dioxide adsorbent precursor 4X was thus obtained. To the total amount of the obtained carbon dioxide adsorbent precursor 4X, 0.8 mL of an aqueous solution (concentration: 46.3 mass%) of potassium carbonate (manufactured by FUJIFILM Wako Pure Chemical Corporation) were evenly delivered by drops, and the carbon dioxide adsorbent precursor 4X thus having absorbed the aqueous solution was then dried at ordinary temperature for 1 hour and next dried using a multi oven (manufactured by AS ONE CORPORATION, MOV-300S) at 40°C to remove the solvent until there was no change in weight. A carbon dioxide adsorbent 4 was thereby produced.

<Example 5: production of carbon dioxide adsorbent 5>

To 1.0 g of powdery zirconium oxide (DAIICHI KIGENSO KAGAKU KOGYO CO., LTD., RC-100), 0.4 mL of an aqueous solution (using ion-exchanged water, concentration: 46.3 mass%) of potassium carbonate (manufactured by FUJIFILM Wako Pure Chemical Corporation) were evenly delivered by drops, and the zirconium oxide thus brought into contact with and having absorbed the aqueous solution was then dried at ordinary temperature for 1 hour and next dried using a multi oven (manufactured by AS ONE CORPORATION, MOV-300S) at 40°C to remove the solvent until there was no change in weight. A carbon dioxide adsorbent 5 was thereby produced.

<Comparative Example 1: production of carbon dioxide adsorbent C1>

To 1.0 g of porous particulate silicon oxide (manufactured by FUJI SILYSIA CHEMICAL LTD., Q-30), 0.8 mL of an aqueous solution (using ion-exchanged water, concentration: 46.3 mass%) of potassium carbonate (manufactured by FUJIFILM Wako Pure Chemical Corporation) were evenly delivered by drops, and the silicon oxide thus brought into contact with and having absorbed the aqueous solution was then dried at ordinary temperature for 1 hour and next dried using a multi oven (manufactured by AS ONE CORPORATION, MOV-300S) at 40°C to remove the solvent until there was no change in weight. A carbon dioxide adsorbent C1 was thereby obtained.

<Comparative Example 2: production of carbon dioxide adsorbent C2>

First, an aqueous solution (using ion-exchanged water, concentration: 12.6 mass%) of cesium nitrate (manufactured by FUJIFILM Wako Pure Chemical Corporation) was prepared. The prepared aqueous solution (0.8 mL) of cesium nitrate was evenly delivered by drops to 1.0 g of porous particulate silicon oxide (manufactured by FUJI SILYSIA CHEMICAL LTD., Q-30), and the silicon oxide thus brought into contact with and having absorbed the aqueous solution was then dried at ordinary temperature for 1 hour and next dried using a multi oven (manufactured by AS ONE CORPORATION, MOV-300S) at 40°C until there was no change in weight.

Next, firing was performed using a muffle furnace (manufactured by Yamato Scientific Co., Ltd., FP100) at 600°C for 2 hours, and a carbon dioxide adsorbent precursor C2X was thus obtained. To the total amount of the obtained carbon dioxide adsorbent precursor C2X, 0.8 mL of an aqueous solution (using ion-exchanged water, concentration: 46.3 mass%) of potassium carbonate (manufactured by FUJIFILM Wako Pure Chemical Corporation) were evenly delivered by drops, and the carbon dioxide adsorbent precursor C2X thus brought into contact with and having absorbed the aqueous solution was then dried at ordinary temperature for 1 hour and next dried using a multi oven (manufactured by AS ONE CORPORATION, MOV-300S) at 40°C to remove the solvent until there was no change in weight. A carbon dioxide adsorbent C2 was thereby produced.

<Measurement of content of metal elements>

The carbon dioxide adsorbents 1 to 5 and C1 and C2 according to Examples 1 to 5 and Comparative Examples 1 and 2 were measured for the content (unit: mmol/g) of metal elements contained therein, that is, a metal element (alkali metal) derived from an alkali metal carbonate and a group 3 element and a group 4 element in the periodic table.

The content of the metal elements was obtained by analysis using an inductively coupled plasma-atomic emission spectrometer (ICP-AES, manufactured by Agilent Technologies, Inc., Vista-PRO) and an inductively coupled plasma-mass spectrometer (ICP-MS, Thermo Fisher Scientific K.K., iCAP Q).

Specifically, the concentration of the metal elements was measured by ICP-AES and ICP-MS, using as a sample a solution obtained by dissolving 0.01 g of the carbon dioxide adsorbent according to each of Examples 1 to 5 and Comparative Examples 1 and 2 in a mixed solvent of hydrofluoric acid (STELLACHEMIFA CORPORATION, 50% high-purity product) and nitric acid (KANTO CHEMICAL CO., INC., EL grade).

Table 1 shows the measurement results.

The average pore diameter (unit: nm) of the carbon dioxide adsorbents according to Examples 1 to 5 and Comparative Examples 1 and 2 was analyzed using a specific surface area/pore distribution measuring apparatus (manufactured by MicrotracBEL Corp., BEL-SORP MINI).

Specifically, the carbon dioxide adsorbents according to Examples 1 to 5 and Comparative Examples 1 and 2 were each subjected to evacuation at 120°C for 2 hours, and an adsorption-desorption isotherm of a nitrogen gas at 77 K (-196°C) was then obtained.

A total pore volume (V) and a specific surface area (A) were obtained from the obtained adsorption-desorption isotherm, and an average pore diameter (D) was calculated on the basis of the following equation. Table 1 shows the results.

$$D = 4V/A$$

[Table 1]

|  | Potassium (mmol/g) | Cesium (mmol/g) | Cerium (mmol/g) | Titanium (mmol/g) | Zirconium (mmol/g) | Average pore diameter (nm) |
|---|---|---|---|---|---|---|
| Example 1 | 2.8 | - | 0.8 | - | - | 56.9 |
| Example 2 | 3.3 | - | - | - | 1.2 | 86.6 |
| Example 3 | 1.9 | 0.1 | 0.2 | - | - | 37.2 |
| Example 4 | 3.6 | - | - | 1.1 | - | 35.7 |
| Example 5 | 3.7 | - | - | - | 6.0 | 13.4 |
| Comparative Example 1 | 4.4 | - | - | - | - | 26.2 |
| Comparative Example 2 | 4.1 | 0.3 | - | - | - | 28.4 |

The symbol "-" in Table 1 represents exception of measurement.

The carbon dioxide adsorption speed (unit: mmol/g/hr) of the carbon dioxide adsorbents according to Examples 1 to 5 and Comparative Examples 1 and 2 was measured using a thermogravimetry-mass spectrometer (TG-MS, manufactured by Rigaku Corporation, Thermo Mass Photo) on the basis of ion intensity at $m/z = 44$ in a mass spectrum derived from carbon dioxide generated through decomposition of calcium oxalate hydrate.

The carbon dioxide adsorbents according to Examples 1 to 5 and Comparative Examples 1 and 2 were each heat-treated using a muffle furnace (manufactured by Yamato Scientific Co., Ltd., FP100) at 200°C for 10 minutes to desorb carbon dioxide adsorbed to the carbon dioxide adsorbent.

Thereafter, the carbon dioxide adsorbent was brought into contact with air using a constant temperature and humidity dryer (manufactured by ESPEC CORP., SH-641) at 25°C and a humidity of 50% for 20 minutes, and had carbon dioxide adsorbed thereto. Next, the amount of desorption of carbon dioxide adsorbed to the carbon dioxide adsorbent was measured using the above-described TG-MS. The first carbon dioxide adsorption speed was calculated by dividing the obtained measurement value by the adsorption time (20 minutes) of carbon dioxide. Table 2 shows the results.

By the following operations (1) and (2), the second to fifth carbon dioxide adsorption speeds were calculated, and the carbon dioxide adsorption speed retention rate (%) was further calculated.

Operation 1: the carbon dioxide adsorbent was heat-treated using a muffle furnace (manufactured by Yamato Scientific Co., Ltd., FP100) at 200°C for 10 minutes to desorb carbon dioxide adsorbed to the carbon dioxide adsorbent. Thereafter, the carbon dioxide adsorbent had carbon dioxide adsorbed thereto using a constant temperature and humidity dryer (manufactured by ESPEC CORP., SH-641) under the conditions of 25°C, a humidity of 50%, and 20 minutes.

Operation 2: after the operation 1 was further repeated 4 times, the amount of desorption of carbon dioxide adsorbed to the carbon dioxide adsorbent was measured using the above-described TG-MS.

The fifth carbon dioxide adsorption speed was calculated by dividing the measurement value by the adsorption time (20 minutes) of carbon dioxide. Table 2 shows the results.

The adsorption speed retention rate of the carbon dioxide adsorbent was calculated from the first and fifth carbon dioxide adsorption speeds. Table 2 shows the results. The adsorption speed retention rate can be an index of durability of the carbon dioxide adsorbent.

[Table 2]

| | First carbon dioxide adsorption speed (mmol/g/hr) | Fifth carbon dioxide adsorption speed (mmol/g/hr) | Carbon dioxide adsorption speed retention rate (%) |
|---|---|---|---|
| Example 1 | 0.48 | 0.42 | 87% |
| Example 2 | 0.56 | 0.48 | 86% |
| Example 3 | 0.47 | 0.29 | 610 |
| Example 4 | 1.38 | 0.83 | 60% |
| Example 5 | 0.75 | 0.87 | 116% |
| Comparative Example 1 | 0.27 | 0.09 | 33% |
| Comparative Example 2 | 0.22 | 0.06 | 30% |

The carbon dioxide adsorbents 1 to 5 according to Examples 1 to 5 are clarified to have a more excellent carbon dioxide adsorption speed and a higher carbon dioxide adsorption speed retention rate than those of the carbon dioxide adsorbents C1 and C2 according to Comparative Examples 1 and 2.

The concentration of carbon dioxide in a living space was calculated by the following equation using the value of the fifth carbon dioxide adsorption speed of each of Examples 1 to 5 and Comparative Examples 1 and 2.

$$C(t+\Delta t) = \frac{C(t) \cdot V + C_{H\text{-}OUT} \cdot V_{H\text{-}OUT} \cdot n \cdot \Delta t + C(0) \cdot V_{Air\text{-}IN} \cdot \Delta t - C(t) \cdot V_{Air\text{-}OUT} \cdot \Delta t - v(C(t)) \cdot \Delta t \cdot w \cdot V_{mol}}{V}$$

(In the equation,

C(t) represents the concentration (%) of carbon dioxide at time t;
V represents the volume (L) of the living space;

$C_{H-OUT}$ represents the concentration (%) of carbon dioxide in breath of a person;

$V_{H-OUT}$ represents the expiratory flow rate (L/hr•person) per person;

n represents the number of people (persons) in the living space;

$V_{Air-IN}$ represents the flow rate (L/hr) of air flowing into the living space;

$V_{Air-OUT}$ represents the flow rate (L/hr) of air exteriorly discharged from the living space;

v(C(t)) represents the carbon dioxide adsorption speed (mmol/g•hr) of the carbon dioxide adsorbent at time t;

w represents the used amount (g) of the carbon dioxide adsorbent; and

Vmol represents the molar volume (L/mmol) of carbon dioxide in the living space.)

In the calculation, the following values were used.

- C(0): 0.04%
- V: 4000 L
- $C_{H-OUT}$: 4.3%
- $V_{H-OUT}$: 900 L/hr•person
- n: two people
- $V_{Air-IN}$: 7800 L/hr
- $V_{Air-OUT}$: 7800 L/hr
- v(C(t)): value calculated on the basis of the fifth carbon dioxide adsorption speed (concentration of carbon dioxide: 400 ppm) of the carbon dioxide adsorbent, assuming that the carbon dioxide adsorption speed of a carbon dioxide adsorbent is proportional to the concentration of carbon dioxide The assumption that the carbon dioxide adsorption speed of a carbon dioxide adsorbent is proportional to the concentration of carbon dioxide was confirmed in an experiment using the carbon dioxide adsorbent 5.
- w: 250 g
- Vmol: 0.0245 L/mmol (value at ordinary pressure and 25°C)

The values of $V_{Air-IN}$ and $V_{Air-OUT}$, which were assumed to be equal, were set to such a value that can duplicate a graph of the concentration of carbon dioxide changed over time in a room without using a carbon dioxide adsorbent [Heejung Jung, SAE International (2013-01-1497), Figure 4].

Fig. 1 shows the calculation results. The use of the carbon dioxide adsorbents C1 and C2 raised the concentration of carbon dioxide in the living space to 4000 to 5000 ppm after 90 minutes. In contrast, the use of the carbon dioxide adsorbents 1 to 5 retained the concentration of carbon dioxide in the living space at 3500 ppm or less even after 90 minutes.

INDUSTRIAL APPLICABILITY

The carbon dioxide adsorbent according to the present invention can further improve the carbon dioxide adsorption speed, and can further improve the carbon dioxide adsorption speed retention rate. The method, according to the present invention, for reducing carbon dioxide in a living space can efficiently reduce carbon dioxide in a living space.

**Claims**

1. A method for reducing carbon dioxide in a living space, the method comprising:

   a step of adsorbing carbon dioxide to a carbon dioxide adsorbent by bringing the carbon dioxide adsorbent into contact with a gas including carbon dioxide and moisture in a living space;
   a step of separating carbon dioxide from the carbon dioxide adsorbent having carbon dioxide adsorbed thereto by heating the carbon dioxide adsorbent to 50°C to 900°C; and
   a step of exteriorly discharging from the living space the carbon dioxide separated,
   the carbon dioxide adsorbent containing: at least one alkali metal carbonate containing an alkali metal; and a metal compound containing at least one element selected from the group consisting of a group 3 element and a group 4 element in a periodic table.

2. The method according to claim 1, wherein the metal compound contains at least one element selected from the group consisting of cerium, titanium, and zirconium.

3. The method according to claim 2, wherein the metal compound contains zirconium.

4. The method according to claim 3, wherein the metal compound is zirconium oxide.

5. The method according to any one of claims 1 to 4, wherein the living space is a house, an office, or a school.

6. The method according to any one of claims 1 to 4, wherein the living space is a vehicle.

7. A carbon dioxide adsorbent comprising:

   a porous material;
   at least one alkali metal carbonate containing an alkali metal; and
   a metal compound containing at least one element selected from the group consisting of a group 3 element and a group 4 element in a periodic table.

8. The carbon dioxide adsorbent according to claim 7, wherein the metal compound contains at least one element selected from the group consisting of cerium, titanium, and zirconium.

9. The carbon dioxide adsorbent according to claim 7 or 8, wherein a content of the at least one element selected from the group consisting of a group 3 element and a group 4 element in the periodic table is 0.1 mmol/g to 25.0 mmol/g.

10. The carbon dioxide adsorbent according to any one of claims 7 to 9, wherein the alkali metal carbonate contains at least one element selected from the group consisting of sodium, potassium, and cesium.

11. The carbon dioxide adsorbent according to any one of claims 7 to 10, comprising two or more of the alkali metal carbonates.

12. The carbon dioxide adsorbent according to any one of claims 7 to 11, wherein a content of the alkali metal is 1.0 mmol/g to 50.0 mmol/g.

13. The carbon dioxide adsorbent according to any one of claims 7 to 12, wherein the porous material is at least one selected from the group consisting of silicon oxide, aluminum oxide, activated carbon, and calcium silicate.

14. The carbon dioxide adsorbent according to any one of claims 7 to 13, having an average pore diameter of 0.3 nm to 500 nm.

15. The carbon dioxide adsorbent according to any one of claims 7 to 14, comprising the porous material supporting the alkali metal carbonate and the metal compound.

16. A method for producing the carbon dioxide adsorbent according to any one of claims 7 to 15, the method comprising following steps:

   a step (1) of obtaining a carbon dioxide adsorbent precursor by bringing the porous material into contact with a solution containing the metal compound, and heating the porous material; and
   a step (2) of obtaining the carbon dioxide adsorbent by bringing the carbon dioxide adsorbent precursor into contact with a solution containing the alkali metal carbonate, and heating the carbon dioxide adsorbent precursor.

17. A method for adsorbing and separating carbon dioxide, the method comprising:

   a step of adsorbing carbon dioxide to the carbon dioxide adsorbent according to any one of claims 7 to 15 by bringing the carbon dioxide adsorbent into contact with a gas including carbon dioxide; and
   a step of separating carbon dioxide from the carbon dioxide adsorbent having carbon dioxide adsorbed thereto by heating the carbon dioxide adsorbent to 50°C to 900°C.

FIG. 1

**EP 4 268 933 A1**

## INTERNATIONAL SEARCH REPORT

| International application No. |
|---|
| **PCT/JP2021/045957** |

**A. CLASSIFICATION OF SUBJECT MATTER**

***B01D 53/14***(2006.01)i; ***B01D 53/62***(2006.01)i; ***B01D 53/82***(2006.01)i; ***B01D 53/96***(2006.01)i; ***C01B 32/50***(2017.01)i;
***B01J 20/04***(2006.01)i; ***B01J 20/28***(2006.01)i; ***B01J 20/30***(2006.01)i; ***B01J 20/34***(2006.01)i
FI: B01D53/14 100; B01J20/28 Z; B01J20/30; B01J20/34 H; B01D53/62; B01D53/82; B01D53/96; C01B32/50; B01J20/04 C

According to International Patent Classification (IPC) or to both national classification and IPC

**B. FIELDS SEARCHED**

Minimum documentation searched (classification system followed by classification symbols)
B01D53/14; B01D53/62; B01D53/82; B01D53/96; C01B32/50; B01J20/04; B01J20/28; B01J20/30; B01J20/34

Documentation searched other than minimum documentation to the extent that such documents are included in the fields searched
Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-094229 A (HITACHI CHEMICAL CO LTD) 20 June 2019 (2019-06-20) paragraphs [0077]-[0081], [0085]-[0086], [0090], [0095], [0100] | 1-17 |
| Y | JP 2004-255315 A (TOSHIBA CERAMICS CO LTD) 16 September 2004 (2004-09-16) paragraph [0003] | 1-17 |
| Y | JP 9-099214 A (TOSHIBA CORP) 15 April 1997 (1997-04-15) paragraphs [0034], [0056] | 1-17 |
| Y | WO 2018/179351 A1 (HITACHI CHEMICAL CO LTD) 04 October 2018 (2018-10-04) paragraphs [0071]-[0075] | 1-17 |
| X | JP 2001-252557 A (TOSHIBA CORP) 18 September 2001 (2001-09-18) claims 1-2, paragraphs [0055]-[0064] | 7-8, 10-11, 15, 17 |
| Y | | 9, 12-14, 16 |
| A | | 1-6 |

☑ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 February 2022** | **22 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**18**

**INTERNATIONAL SEARCH REPORT**

| International application No. |
| --- |
| **PCT/JP2021/045957** |

**C.        DOCUMENTS CONSIDERED TO BE RELEVANT**

| Category* | Citation of document, with indication, where appropriate, of the relevant passages | Relevant to claim No. |
| --- | --- | --- |
| X | JP 2012-024648 A (HITACHI LTD) 09 February 2012 (2012-02-09)<br>claims 1-2, 6, 8, paragraphs [0032], [0043] | 7-8, 10, 13-15, 17 |
| Y | | 1-6, 9, 11-12, 16 |

Form PCT/ISA/210 (second sheet) (January 2015)

**INTERNATIONAL SEARCH REPORT**

| International application No. |
|---|
| **PCT/JP2021/045957** |

---

**Box No. III    Observations where unity of invention is lacking (Continuation of item 3 of first sheet)**

This International Searching Authority found multiple inventions in this international application, as follows:

(Invention 1) Claims 1-6
    A special technical feature was found in the invention in claim 1.
    Therefore, the invention in claim 1, and the invention in claims 2-6, which shares a same or corresponding special technical feature with the aforementioned special technical feature, are classified as invention 1.

(Invention 2) Claims 7-17
    The invention in claim 7 is not an invention in the same category that includes all invention-specifying matters of the invention in claim 1. Moreover, as a result of examining the invention that is the subject of the examination, the invention in claim 7 is not an invention that can substantially be examined without additional prior art search and judgment, and there is no reason to think that it would be more efficient to examine the invention in claim 7 together with said invention.
    Therefore, claims 7-17 are classified as invention 2.

1. ☐    As all required additional search fees were timely paid by the applicant, this international search report covers all searchable claims.

2. ☑    As all searchable claims could be searched without effort justifying additional fees, this Authority did not invite payment of additional fees.

3. ☐    As only some of the required additional search fees were timely paid by the applicant, this international search report covers only those claims for which fees were paid, specifically claims Nos.:

4. ☐    No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest and, where applicable, the payment of a protest fee.

☐    The additional search fees were accompanied by the applicant's protest but the applicable protest fee was not paid within the time limit specified in the invitation.

☐    No protest accompanied the payment of additional search fees.

---

Form PCT/ISA/210 (continuation of first sheet) (January 2015)

**INTERNATIONAL SEARCH REPORT**
Information on patent family members

International application No.

**PCT/JP2021/045957**

| Patent document cited in search report | | | Publication date (day/month/year) | Patent family member(s) | | | Publication date (day/month/year) |
|---|---|---|---|---|---|---|---|
| JP | 2019-094229 | A | 20 June 2019 | (Family: none) | | | |
| JP | 2004-255315 | A | 16 September 2004 | (Family: none) | | | |
| JP | 9-099214 | A | 15 April 1997 | US column 10, lines 15-33, example 2 | 5866090 | A | |
| WO | 2018/179351 | A1 | 04 October 2018 | US paragraphs [0082]-[0086] EP TW CA CN | 2020/0016536 3603769 201841683 3053097 110352090 | A1 A1 A A1 A | |
| JP | 2001-252557 | A | 18 September 2001 | (Family: none) | | | |
| JP | 2012-024648 | A | 09 February 2012 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016059917 A